# EUROPÄISCHE PATENTSCHRIFT

(11) **EP 0 728 785 B1**
(45) Veröffentlichungstag und Bekanntmachung des Hinweises auf die Patenterteilung: **02.05.2001**
(21) Anmeldenummer: 96102039.3
(22) Anmeldetag: 13.02.1996
(51) Int. Cl.: C08G 18/70, C08G 18/80

(54) **Wasserdispergierbare Polyisocyanatgemische**
Water-dispersible polyisocyanate mixtures
Mélanges de polyisocyanates dispersables dans l'eau

(30) Priorität: 24.02.1995 DE 19506534
(43) Veröffentlichungstag der Anmeldung: 28.08.1996
(73) Patentinhaber: BAYER AG, 51368 Leverkusen (DE)
(72) Erfinder: Laas, Hans-Josef, Dr., D-50733 Köln (DE); Brahm, Martin, Dr., D-51373 Leverkusen (DE); Halpaap, Reinhard, Dr., D-51519 Odenthal (DE)

(56) Entgegenhaltungen:
- EP-A- 0 486 881
- EP-A- 0 554 745
- DE-A- 4 007 637

## Beschreibung

Die Erfindung betrifft nichtionisch-hydrophil modifizierte, wasserdispergierbare Polyisocyanatgemische, ein Verfahren zu ihrer Herstellung und ihre Verwendung als Ausgangskomponente bei der Herstellung von Polyurethankunststoffen, insbesondere als Vernetzer für wasserlösliche oder -dispergierbare Lackbindemittel oder -bindemittelkomponenten mit gegenüber Isocyanatgruppen reaktionsfähigen Gruppen.

Vor dem Hintergrund einer zunehmend strengeren Umweltgesetzgebung gewannen in den letzten Jahren wasserdispergierbare Polyisocyanate für verschiedene Anwendungsgebiete an Bedeutung.

Eine besondere Rolle spielen wasserdispergierbare Polyisocyanate heute als Vernetzerkomponenten für wasserverdünnbare Zweikomponenten-Polyurethan(2K-PUR)-Lacke. In Kombination mit wäßrigen Polyoldispersionen gestatten sie die Formulierung lösemittelfreier Lacksysteme, die bereits bei Raumtemperatur zu qualitativ hochwertigen Beschichtungen aushärten, die hinsichtlich Lösemittel- und Chemikalienbeständigkeit oder mechanischer Belastbarkeit konventionellen Lacken in nichts nachstehen (vgl. z. B. EP-A 358 979, EP-A 469 389, EP-A 496 210, EP-A 542 105, EP-A 543 228, EP-A 562 282, EP-A 562 436, EP-A 583 728, DE-OS 41 29 951, DE-OS 42 26 242, DE-OS 42 26 243 oder DE-OS 42 26 270).

Bedeutung besitzen wasserdispergierbare Polyisocyanatzubereitungen daneben auch als Zusatzmittel für wäßrige Dispersionsklebstoffe. Mit ihrer Hilfe lassen sich beispielsweise die Wärmebeständigkeit und Wasserfestigkeit von Verklebungen unterschiedlicher Materialien erheblich verbessern (vgl. z. B. EP-A 61 628 und EP-A 206 059).

Wasserdispergierbare Polyisocyanate finden außerdem als Vernetzerkomponenten für Fluorcarbondispersionen in der umweltfreundlichen Textilausrüstung (EP-A 560 161) oder in formaldehydfreien Textildruckfarben (EP-A 571 867) Verwendung. In jüngster Zeit wurde auch über den Einsatz hydrophiler Polyisocyanate als Hilfsmittel zur Naßverfestigung von Papier berichtet (DE-OS 4211 480).

Die Herstellung hydrophiler, wasserdispergierbarer Polyisocyanate ist in einer Reihe von Vorveröffentlichungen beschrieben.

Die GB-PS'en 1 417 618 und 1 417 276 nennen beispielsweise Reaktionsprodukte organischer, insbesondere aromatischer Polyisocyanate mit mindestens 5 Ethylenoxideinheiten aufweisenden Polyethylenglykolmonoalkylethern bzw. mit Diestern aus Malonsäure und solchen Polyethern als oberflächenaktive Substanzen, die nach der GB-PS 1 444 933 und der DE-OS 29 08 844 die Herstellung stabiler wäßriger Emulsionen aromatischer Polyisocyanate ermöglichen.

Mit Hilfe von Alkylenoxidpolyethern hydrophil modifizierte aromatische Polyisocyanate sind auch aus den EP-A'en 61 628 und 95 594 bekannt. In Form wäßriger Emulsionen finden diese Produkte insbesondere im Klebstoffbereich Verwendung.

Für hochwertige lichtechte Anwendungen sowie Anwendungen, die lange Verarbeitungszeiten voraussetzen, sind Derivate aromatischer Polyisocyanate aufgrund ihrer bekanntermaßen geringen Vergilbungsbeständigkeit sowie ihrer hohen Reaktivität gegenüber dem Dispergiermedium Wasser und der damit verbundenen Kohlendioxidentwicklung allerdings nur bedingt geeignet. Hier kommen vorzugsweise Produkte auf Basis der weniger reaktiven (cyclo)aliphatischen Polyisocyanate zum Einsatz.

Wasserdispergierbare Zubereitungen (cyclo)aliphatischer Polyisocyanate sind beispielsweise Gegenstand der EP-A 206 059. Sie enthalten als Emulgatoren Umsetzungsprodukte aus Polyisocyanaten und ein- oder mehrwertigen Polyalkylenoxidalkoholen, bestehend aus mindestens einer, mindestens 10 Ethylenoxideinheiten aufweisenden Polyetherkette, und dienen als Zusatzmittel für wäßrige Klebstoffe. Aufgrund eines sehr hohen während der Dispergierung zu überwindenden Viskositätsmaximums lassen sich die wasserdispergierbaren Polyisocyanatzubereitungen dieser Vorveröffentlichung jedoch oftmals nur unter Anwendung erheblicher Scherkräfte (z.B. Hochgeschwindigkeitsrührer) homogen in wäßrige Medien einarbeiten. Sie neigen zudem insbesondere bei hohen Emulgatorgehalten, wie sie zum Erreichen besonders feinteiliger Dispersionen erforderlich sind, häufig zum Kristallisieren.

In der Praxis haben sich daher für die Mehrzahl der obengenannten Anwendungsgebiete hydrophiler Polyisocyanate vor allem die in der EP-A 540 985 und der US-PS 5 200 489 beschriebenen Umsetzungsprodukte (cyclo)aliphatischer Lackpolyisocyanate mit kurzkettigen, im statistischen Mittel weniger als 10 Ethylenoxideinheiten aufweisenden Polyethylenoxidpolyethern durchgesetzt, die sich sehr leicht bereits von Hand zu stabilen Dispersionen in Wasser einrühren lassen und selbst bei hohen Gehalten an Ethylenoxideinheiten keinerlei Kristallisationstendenz zeigen. Aufgrund des relativ niedrigen Molekulargewichtes der zur Hydrophilierung eingesetzten Polyethylenoxidpolyether weisen diese Produkte allerdings bei gleichem Hydrophilierungsgrad, d.h. bei gleich hohem Gesamtgehalt an Ethylenoxideinheiten, einen geringeren Isocyanatgehalt und eine niedrigere mittlere Isocyanatfunktionalität auf als vergleichbare wasserdispergierbare Polyisocyanatzubereitungen der in in der EP-A 206 059 beschriebenen Art. In Hinblick auf eine hohe Vernetzungsdichte, bei Lacken und Beschichtungen gleichbedeutend mit guten Beständigkeitseigenschaften, sind aber gerade Vernetzerkomponenten mit hohem NCO-Gehalt und möglichst hoher Funktionalität erwünscht.

Gemäß der Lehre der DE-OS 40 36 927 stellen Abmischungen aliphatischer Polyisocyanate mit speziellen Emulgatoren, wie sie durch Umsetzung von Diisocyanaten mit Polyalkylenetheralkoholen in einem OH/NCO-Äquivalentverhältnis von 0,6:1 bis 1,2:1 erhältlich sind, ebenfalls geeignete Zusatzmittel für wäßrige Beschichtungsmittel und Klebstoffdispersionen dar. Der Hauptnachteil der Polyisocyanatzubereitungen dieser Vorveröffentlichung liegt aber gerade in der besonderen Natur der verwendeten Emulgatoren, die infolge des bei ihrer Herstellung gewählten OH/NCO-Äquivalentverhältnisses immer zumindest teilweise, beim bevorzugten Äquivalentverhältnis von OH/NCO von 0,8:1 bis 1,2:1 immer sogar zum überwiegenden Teil aus nichtfunktionellen, inerten Molekülen bestehen. Bei einem Einsatz in wäßrigen Lacksystemen können diese nichtreaktiven Emulgatorbestandteile, die nicht chemisch in der Beschichtung gebunden werden, sehr leicht aus dem Lackfilm ausdiffundieren, was zu Oberflächenstörungen und in der Regel zur Versprödung der Beschichtung führt. Auch für den industriellen Einsatz als Papiernaßfestmittel sind Polyisocyanatzubereitungen auf Basis der genannten Emulgatoren kaum geeignet, da die inerten Bestandteile zu einer starken Belastung des Abwassers führen würden.

Aufgabe der vorliegenden Erfindung war es nun, neue wasserdispergierbare Polyisocyanatgemische zur Verfügung zu stellen, die für den Einsatz in sämtlichen der obengenannten Anwendungsgebieten hydrophiler Polyisocyanate, insbesondere als Ausgangskomponenten zur Herstellung von Polyurethankunststoffen und vor allem als Vernetzer für wäßrige Bindemittel oder Bindemittelkomponenten in wäßrigen Beschichtungssystemen geeignet sind ohne mit den genannten Nachteilen der wasserdispergierbaren Polyisocyanate des Standes der Technik behaftet zu sein.

Die Aufgabe konnte mit der Bereitstellung der nachstehend näher beschriebenen erfindungsgemäßen Polyisocyanatgemische bzw. des Verfahrens zu ihrer Herstellung gelöst werden. Die nachstehend näher beschriebenen erfindungsgemäßen Polyisocyanatgemische basieren auf der überraschenden Beobachtung, daß durch Umsetzung mit speziellen, monofunktionellen Polyetheresteralkoholen hydrophil modifizierte Polyisocyanate, selbst bei hohen Gehalten an innerhalb der Polyetheresterketten angeordneten langkettigen, im statistischen Mittel mehr als 10 Ethylenoxideinheiten aufweisenden Polyetherketten, im Gegensatz zu den wasserdipsergierbaren Polyisocyanaten der in der EP-A 206 059 beschriebenen Art mit ebenso hohen Gehalten an einfachen Polyethern der gleichen Kettenlänge auch bei niedrigen Temperaturen und längerer Lagerung keinerlei Kristallisationstendenz aufweisen.

Die Verwendung langkettiger Polyetheresteralkohole beim erfindungsgemäßen Verfahren ermöglicht die Herstellung hochhydrophilierter und daher besonders feinteilig zu dispergierender Polyisocyanate, die sich gegenüber den ebenfalls als kristallisationsstabil bekannten, einfache kurzkettige Polyetheralkohole enthaltenden Polyisocyanatgemischen der in der EP-A 540 985 und der US-PS 5 200 489 beschriebenen Art bei gleichen Gesamtgehalten an Ethylenoxideinheiten durch einen höheren Isocyanatgehalt sowie eine erhöhte Funktionalität auszeichnen.

Besonders überraschend erschien die Tatsache, daß sich aus den neuen erfindungsgemäßen Polyisocyanatgemischen, die Umsetzungsprodukte aus einem einfachen Polyetheralkohol und 101 ε-Caprolacton enthalten, bereits bei deutlich niedrigeren Gesamtgehalten an Ethylenoxideinheiten sedimentationsstabile wäßrige Dispersionen herstellen lassen, als aus wasserdispergierbaren Polyisocyanatgemischen des Standes der Technik, die lediglich durch Modifizierung mit dem entsprechenden einfachen Polyetheralkohol erhalten wurden.

Gegenstand der vorliegenden Erfindung sind wasserdispergierbare Polyisocyanatgemische, gekennzeichnet durch
a) eine mittlere NCO-Funktionalität von 1,8 bis 4,6,
b) einen Gehalt an Isocyanatgruppen (berechnet als NCO; Molekulargewicht = 42) von 7,0 bis 21,5 Gew.-%
   und
c) einen Gehalt an innerhalb von Polyetheresterketten der allgemeinen Formel

   Y[-Z-O]ₘ[-CO-(CH₂)₅-O]ₙ-

   angeordneten Ethylenoxideinheiten (berechnet als C₂H₄O, Molekulargewicht = 44) von 5 bis 25 Gew.-%, wobei
   - Y: für einen Rest R¹-O- oder einen Rest R²R³N- steht,
   worin
   - R¹, R² und R³: für gleiche oder verschiedene Reste stehen und jeweils einen gesättigten oder ungesättigten aliphatischen oder cycloaliphatischen, einen gegebenenfalls alkylsubstituierten aromatischen oder araliphatischen Rest bedeuten, der bis zu 18 Kohlenstoffatome und gegebenenfalls bis zu 3 Heteroatome aus der Reihe Sauerstoff, Schwefel, Stickstoff enthalten kann, und wobei
   - R² und R³: auch zusammen mit dem Stickstoffatom und gegebenenfalls einem Sauerstoff- oder einem weiteren Stickstoffatom einen heterocyclischen Ring mit 3 bis 5 Kohlenstoffatomen bilden können,
   - Z: für einen Ethylenrest (-CH₂-CH₂-) oder einen Propylenrest (-CH₂-CH(CH₃)-) steht, wobei der Anteil der Ethylenreste an der Gesamtmenge der Alkylenreste Z mindestens 70 Mol-% beträgt,
   - m: für eine ganze oder im statistischen Mittel gebrochene Zahl von 5 bis 70 und
   - n: für eine ganze oder im statistischen Mittel gebrochene Zahl von 0,5 bis 5 steht,
   mit der Maßgabe, daß der Quotient m:n mindestens 3,5 beträgt.

Gegenstand der Erfindung sind weiterhin wasserdispergierbare Polyisocyanatgemische, gekennzeichnet durch
a) eine mittlere NCO-Funktionalität von 2,0 bis 4,0,
b) einen Gehalt an Isocyanatgruppen (berechnet als NCO; Molekulargewicht = 42) von 12,0 bis 20,5 Gew.-%
   und
c) einen Gehalt an innerhalb von Polyetheresterketten der allgemeinen Formel

   Y[-Z-O]ₘ[-CO-(CH₂)₅-O]ₙ-

   angeordneten Ethylenoxideinheiten (berechnet als C₂H₄O, Molekulargewicht = 44) von 7 bis 20 Gew.-%, wobei
   - Y: für einen Rest R¹-O- steht,
   wobei
   R¹ für einen, gegebenenfalls ein Stickstoffatom und/oder ein Sauerstoffatom als Heteroatome enthaltenden (cyclo)aliphatischen Kohlenwasserstoffrest mit 1 bis 10 Kohlenstoffatomen steht,
   - Z: für einen Ethylenrest (-CH₂-CH₂-) oder einen Propylenrest (-CH₂-CH(CH₃)-) steht, wobei der Anteil der Ethylenreste an der Gesamtmenge der Alkylenreste Z mindestens 80 mol-% beträgt,
   - m: für eine ganze oder im statistischen Mittel gebrochene Zahl von 5 bis 60 und
   - n: für eine ganze oder im statistischen Mittel gebrochene Zahl von 0,5 bis 3 steht,
   mit der Maßgabe, daß der Quotient m:n mindestens 4,5 beträgt.

Gegenstand der Erfindung ist auch ein Verfahren zur Herstellung dieser wasserdispergierbaren Polyisocyanatgemische, dadurch gekennzeichnet, daß man
A) eine Polyisocyanatkomponente mit einer mittleren NCO-Funktionalität von 2,1 bis 5,0 und einem Gehalt an Isocyanatgruppen (berechnet als NCO; Molekulargewicht = 42) von 8,0 bis 22,5 Gew.-% mit
B) einem Polyetherestermonoalkohol der allgemeinen Formel

   Y[-Z-O]ₘ[-CO-(CH₂)₅-O]ₙ-H ,

   in welcher Y, Z, m und n die oben angegebene Bedeutung aufweisen, unter Einhaltung eines NCO/OH-Äquivalentverhältnisses von 4:1 bis 120:1 umsetzt, wobei im übrigen Art und Mengenverhältnisse der genannten Ausgangskomponenten so gewählt werden, daß die resultierenden Umsetzungsprodukte den oben unter a) bis c) genannten Bedingungen entsprechen.

Gegenstand der Erfindung ist auch ein Verfahren zur Herstellung wasserdispergierbarer Polyisocyanatgemische gemäß Anspruch 2, dadurch gekennzeichnet, daß man
A) eine Polyisocyanatkomponente mit einer mittleren NCO-Funktionalität von 2,3 bis 4,2 und einem Gehalt an Isocyanatgruppen (berechnet als NCO; Molekulargewicht = 42) von 14,0 bis 22,5 Gew.-% mit
B) einem Polyetherestermonoalkohol der allgemeinen Formel

   Y[-Z-O]ₘ[-CO-(CH₂)₅-O]ₙ-H ,

   in welcher Y, Z, m und n die in Anspruch 2 angegebene Bedeutung aufweisen,
unter Einhaltung eines NCO/OH-Äquivalentverhältnisses von 6:1 bis 100:1 umsetzen, wobei im übrigen Art und Mengenverhältnisse der genannten Ausgangskomponenten so gewählt werden, daß die resultierenden Umsetzungsprodukte den in Anspruch 2 unter a) bis c) genannten Bedingungen entsprechen.

Gegenstand der Erfindung ist auch die Verwendung dieser Polyisocyanatgemische als Ausgangskomponente bei der Herstellung von Polyurethankunststoffen.

Gegenstand der Erfindung ist schließlich auch die Verwendung dieser Polyisocyanatgemische als Vernetzerkomponente für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

Die beim erfindungsgemäßen Verfahren einzusetzende Komponente A) weist eine (mittlere) NCO-Funktionalität von 2,1 bis 5,0, vorzugsweise 2,3 bis 4,2 auf und einen Gehalt an Isocyanatgruppen von 8,0 bis 22,5 Gew.-%, vorzugsweise 14,0 bis 22,5 Gew.-%. Sie besteht aus mindestens einem organischen Polyisocyanat mit aliphatisch, cycloaliphatisch, araliphatisch und/oder aromatisch gebundenen Isocyanatgruppen.

Es handelt sich bei den Polyisocyanaten bzw. Polyisocyanatgemischen der Komponente A) um beliebige, durch Modifizierung einfacher aliphatischer, cycloaliphatischer, araliphatischer oder aromatischer Diisocyanate hergestellte Polyisocyanate mit Uretdion- und/oder Isocyanurat-, Urethan- und/oder Allophanat-, Allophanat-und Isocyanurat-, Biuret- oder Oxadiazintrionstruktur, wie sie beispielsweise in den DE-OS'en 1 670 666, 1 954 093, 2 641 380, 3 700 209 und 3 900 053 oder den EP-A'en 316 738, 336 205, 339 396, 496 208, 524 500 oder 524 501 beispielhaft beschrieben sind.

Geeignete Diisocyanate zur Herstellung solcher Lackpolyisocyanate sind grundsätzlich solche des Molekulargewichtsbereichs 140 bis 400 mit aliphatisch, cycloaliphatisch, araliphatisch oder aromatisch gebundenen Isocyanatgruppen, wie z.B. 1,4-Diisocyanatobutan, 1,6-Diisocyanatohexan, 1,5-Diisocyanato-2,2-dimethylpentan, 2,2,4- bzw. 2,4,4-Trimethyl-1,6-diisocyanatohexan, 1,10-Diisocyanato-decan, 1,3- und 1,4-Diisocyanatocyclohexan, 1-Isocyanato-3,3,5-trimethyl-5-isocyanatomethylcyclohexan (Isophorondiisocyanat) 4,4'-Diisocyanatodicyclohexylmethan, 1-Isocyanato-1-methyl-4(3)isocyanatomethylcyclohexan, 1,3- und 1,4-Bis-(2-isocyanato-prop-2-yl)-benzol, 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich bei den Ausgangskomponenten A) um Polyisocyanate oder Polyisocyanatgemische der genannten Art mit ausschließlich aliphatisch und/oder cycloaliphatisch gebundenen Isocyanatgruppen, eine Aussage, die folgerichtig auch für die erfindungsgemäßen Produkte gilt.

Ganz besonders bevorzugte Ausgangskomponenten A) sind den oben gemachten Ausführungen entsprechende Polyisocyanate bzw. Polyisocyanatgemische auf Basis von 1,6-Diisocyanatohexan, Isophorondiisocyanat, 4,4'-Diisocyanatodicyclohexylmethan oder Gemischen dieser Diisocyanate.

Bei der beim erfindungsgemäßen Verfahren einzusetzenden Ausgangskomponente B) handelt es sich um einwertige Polyetheresteralkohole der allgemeinen Formel

Y[-Z-O]ₘ[-CO-(CH₂)₅-O]ₙ-H,

in welcher die Variablen die bereits obengenannte Bedeutung haben. Vorzugsweise haben diese Variablen, und dies gilt auch für die vor- und nachstehend genannten allgemeinen Formeln, folgende Bedeutung:
- Y: steht vorzugsweise für einen Rest R¹-O-, wobei R¹ für einen, gegebenenfalls ein Sauerstoffatom und/oder gegebenenfalls ein Stickstoffatom als Heteroatome aufweisenden (cyclo)aliphatischen Kohlenwasserstoffrest mit bis zu 10 Kohlenstoffatomen, insbesondere einen C₁-C₄-Alkylrest steht.
- Z: steht stellvertretend für Ethylen- und Propylenreste, wobei der Anteil der Ethylenreste an der Gesamtmenge der Alkylenreste Z mindestens 80, besonders bevorzugt 100 Mol-% beträgt.
- m: steht vorzugsweise für eine ganze oder im statistischen Mittel gebrochene Zahl von 5 bis 60, und
- n: steht vorzugsweise für eine ganze oder im statistischen Mittel gebrochene Zahl von 0,5 bis 3,
mit der Maßgabe, daß der Quotient m:n mindestens 4,5 beträgt.

Die Polyesteralkohole der genannten allgemeinen Formel sind in an sich bekannter Weise durch Umsetzung einwertiger Polyalkylenoxidpolyetheralkohole mit ε-Caprolacton unter Ringöffnung erhältlich.

Die Herstellung von Polyalkylenoxidpolyetheralkoholen durch Alkoxylierung geeigneter Startermoleküle ist ebenfalls bereits bekannt. Geeignete Startermoleküle zur Herstellung einwertiger Polyalkylenoxidpolyetheralkohole sind Monohydroxyverbindungen der allgemeinen Formel

R¹-O-H

oder sekundäre Monoamine der allgemeinen Formel

R²R³N-H,

in welchen R¹, R² und R³ die obengenannte Bedeutung haben, beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethyl-cyclohexan, 3-Ethyl-3-hydroxymethyloxetan, oder Tetrahydrofurfurylalkohol; ungesättigte Alkohole wie Allylalkohol, 1,1-Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Für die Alkoxylierungsreaktion geeignete Alkylenoxide sind, den oben gemachten Ausführungen bezüglich der Bedeutung des Restes Z entsprechend, Ethylenoxid und Propylenoxid, die in beliebiger Reihenfolge oder auch im Gemisch bei der Alkoxylierungsreaktion eingesetzt werden können.

Zur Herstellung der Ausgangskomponenten B) werden monofunktionelle entweder reine Polyethylenoxidpolyetheralkohole oder gemischte Polyalkylenoxidpolyetheralkohole, deren Alkylenoxideinheiten zu mindestens 70 Mol-%, vorzugsweise zu mindestens 80 Mol-% und ganz besonders bevorzugt zu 100 Mol-% aus Ethylenoxideinheiten bestehen, mit ε-Caprolacton in einem molaren Verhältnis von ε-Caprolacton zu Polyetheralkohol, bezogen auf das aus OH-Zahl und der Funktionalität 1 berechenbare mittlere Molekulargewicht, von 0,5:1 bis 5:1, vorzugsweise von 0,5:1 bis 3:1, besonders bevorzugt 1:1 bis 2:1, unter Beachtung der oben gemachten Ausführungen bezüglich des Quotienten m:n, gegebenenfalls in Gegenwart von Katalysatoren, wie Lewis- oder Brönstedt-Säuren, organischen Zinn- oder Titanverbindungen bei Temperaturen von 20 bis 200°C, vorzugsweise 50 bis 160°C umgesetzt.

Bevorzugte Ausgangskomponenten B) für das erfindungsgemäße Verfahren sind Polyetheresteralkohole auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden.

Zur Durchführung des erfindungsgemäßen Verfahrens werden die Ausgangskomponenten A) und B) bei Temperaturen von 20 bis 120°C, vorzugsweise 40 bis 100°C, unter Einhaltung eines NCO-/OH-Äquivalent-Verhältnisses von 4:1 bis 120:1, vorzugsweise 6:1 bis 100:1, vorzugsweise bis zum Erreichen des theoretisch errechneten NCO-Gehaltes miteinander umgesetzt. Im übrigen werden Art und Mengenverhältnisse der Ausgangskomponenten im Rahmen der gemachten Angaben so gewählt, daß die resultierenden Polyisocyanatgemische den oben unter a) bis c) gemachten Angaben entsprechen, wobei a) die mittlere NCO-Funktionalität vorzugsweise 2,0 bis 4,0, besonders bevorzugt 2,2 bis 3,6, b) der NCO-Gehalt vorzugsweise 12,0 bis 20,5 Gew.-%, besonders bevorzugt 14,0 bis 20,0 Gew.-% und c) der Gehalt an innerhalb von Polyetheresterketten der vorstehend beschriebenen Art angeordneten Ethylenoxideinheiten vorzugsweise 7 bis 20 Gew.-%, besonders bevorzugt 8 bis 18 Gew.-% beträgt.

Die Umsetzung kann gegebenenfalls, wenn auch weniger bevorzugt in einem geeigneten, gegenüber Isocyanatgruppen inerten Lösemittel durchgeführt werden. Geeignete Lösemittel sind die an sich bekannten üblichen Lacklösemittel, wie z.B. Ethylacetat, Butylacetat, Ethylenglykolmonomethyl- oder -ethyletheracetat, 1-Methoxypropyl-2-acetat, 2-Butanon, 4-Methyl-2-pentanon, Cyclohexanon, Toluol, aber auch Lösemittel wie Propylenglykoldiacetat, Diethylenglykoldimethylther, Diethylenglykolethyl- und -butyletheracetat, N-Methylpyrrolidon und N-Methylcaprolactam, oder Gemische solcher Lösemittel.

Die erfindungsgemäßen Verfahrensprodukte stellen klare, praktisch farblose Polyisocyanatgemische der bereits oben genannten Zusammensetzung dar, die selbst bei längerer Lagerung und niedrigen Temperaturen auch bei hohen Gehalten an innerhalb der Polyetheresterketten angeordneten langkettigen, im statistischen Mittel mehr als 10 Ethylenoxideinheiten aufweisenden Polyethersegmenten im Gegensatz zu vergleichbaren wasserdispergierbaren Polyisocyanaten der in der EP-A 206 059 genannten Art mit ebenso hohen Gehalten baugleicher Polyetherketten nicht zur Kristallisation neigen.

Der Einsatz solcher langkettiger Polyetherester ermöglicht nach dem erfindungsgemäßen Verfahren die Herstellung hochhydrophilierter, besonders feinteilig zu dispergierender Polyisocyanate, die sich gegenüber den bekannten kristallisationsstabilen, kurzkettige Polyetheralkohole enthaltenden Polyisocyanatgemischen der in der EP-A 540 985 und der US-PS 5 200 489 beschriebenen Art bei gleichen Gesamtgehalten an Ethylenoxideinheiten durch höhere Isocyanatgehalte sowie eine erhöhte Funktionalität auszeichnen.

Die neuen Polyetherester-modifizierten Polyisocyanatgemische lassen sich leicht, ohne Einsatz hoher Scherkräfte durch bloßes Einrühren in Wasser dispergieren, wobei zum Erhalten sedimentationsstabiler wäßriger Dispersionen bei einer vorgegebenen Zusammensetzung und Molekulargewichtsverteilung der innerhalb der Polyetheresterketten vorliegenden Polyethersegmente bereits ein deutlich niedrigerer Gesamtgehalt an Ethylenoxideinheiten ausreicht, als im Falle von wasserdispergierbaren Polyisocyanatgemischen des Standes der Technik, die durch Modifizierung mit einfachen Polyetheralkoholen der gleichen Zusammensetzung und Molekulargewichtsverteilung hergestellt wurden. Diese Tatsache stellt insbesondere für die Verwendung der erfindungsgemäßen Polyisocyanatgemische in wäßrigen 2K-PUR-Lacken einen Vorteil dar, da sich auf diese Weise Beschichtungen mit einem geringeren Gehalt an hydrophilen Gruppen und infolgedessen einer höheren Wasserfestigkeit erhalten lassen.

Gegebenenfalls können den nach dem erfindungsgemäßen Verfahren hergestellten Polyisocyanatgemischen vor der Emulgierung noch weitere nichthydrophilierte Polyisocyanate, insbesondere Lackpolyisocyanate der obengenannten Art, zugesetzt werden, wobei die Mengenverhältnisse so gewählt werden, daß die resultierenden Polyisocyanatgemische den vorstehend unter a) bis c) genannten Bedingungen entsprechen, und somit ebenfalls erfindungsgemäße Polyisocyanatgemische darstellen, da diese im allgemeinen aus Gemischen aus
(i) erfindungsgemäß hydrophil modifizierten Polyisocyanaten und
(ii) unmodifizierten Polyisocyanaten der beispielhaft genannten Art bestehen.

In solchen Mischungen übernehmen die erfindungsgemäßen Verfahrensprodukte die Funktion eines Emulgators für den nachträglich zugemischten Anteil an nichthydrophilen Polyisocyanaten.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar.

Hierzu werden vorzugsweise wäßrige Emulsionen der Polyisocyanatgemische eingesetzt, die in Kombination mit in Wasser dispergierten Polyhydroxylverbindungen im Sinne von wäßrigen Zweikomponenten-Systemen zur Umsetzung gebracht werden können.

Besonders bevorzugt werden die erfindungsgemäßen Polyisocyanatgemische als Vernetzer für in Wasser gelöste oder dispergierte Lackbindemittel oder Lackbindemittelkomponenten mit gegenüber Isocyanatgruppen reaktionsfähigen Gruppen, insbesondere alkoholischen Hydroxylgruppen, bei der Herstellung von Beschichtungen unter Verwendung von wäßrigen Beschichtungsmitteln auf Basis derartiger Bindemittel bzw. Bindemittelkomponenten verwendet. Die Vereinigung des Vernetzers, gegebenenfalls in emulgierter Form, mit den Bindemitteln bzw. Bindemittelkomponenten kann hierbei durch einfaches Verrühren vor der Verarbeitung der Beschichtungsmittel nach beliebigen Methoden oder auch unter Verwendung von Zweikomponenten-Spritzpistolen erfolgen.

In diesem Zusammenhang seien als Lackbindemittel oder Lackbindemittelkomponenten beispielhaft erwähnt: in Wasser gelöste oder dispergierte, Hydroxylgruppen aufweisende Polyacrylate, insbesondere solche des Molekulargewichtsbereichs Mₙ 1 000 bis 10 000, die mit organischen Polyisocyanaten als Vernetzer wertvolle Zweikomponenten-Bindemittel darstellen oder in Wasser dispergierte, gegebenenfalls Urethan-modifizierte, Hydroxylgruppen aufweisende Polyesterharze der aus der Polyester- und Alkydharzchemie bekannten Art. Bei dieser erfindungsgemäßen Verwendung werden die erfindungsgemäßen Polyisocyanatgemische im allgemeinen in solchen Mengen eingesetzt, die einem Äquivalentverhältnis von NCO-Gruppen zu gegenüber NCO-Gruppen reaktionsfähigen Gruppen, insbesondere alkoholischen Hydroxylgruppen, von 0,5:1 bis 2:1 entsprechen. Als Reaktionspartner für die erfindungsgemäßen Polyisocyanatgemische prinzipiell geeignet sind alle in Wasser gelösten oder dispergierten Bindemittel, die NCO-reaktive Gruppen aufweisen. Hierzu zählen beispielsweise auch in Wasser dispergierte Polyurethane oder Polyharnstoffe, die aufgrund der in den Urethan- bzw. Harnstoffgruppen vorliegenden aktiven Wasserstoffatome mit Polyisocyanaten vernetzbar sind.

Gegebenenfalls können die erfindungsgemäßen Polyisocyanatgemische in untergeordneten Mengen auch nichtfunktionellen wäßrigen Lackbindemitteln zur Erzielung ganz spezieller Eigenschaften, beispielsweise als Additiv zur Haftverbesserung zugemischt werden.

Selbstverständlich können die erfindungsgemäßen Polyisocyanatgemische auch in mit aus der Polyurethanchemie an sich bekannten Blockierungsmitteln blockierter Form in Kombination mit den obengenannten wäßrigen Lackbindemitteln oder Lackbindemittelkomponenten im Sinne von wäßrigen Einkomponenten-PUR-Einbrennsystemen eingesetzt werden.

Als Untergründe für die mit Hilfe der erfindungsgemäßen Polyisocyanatgemische formulierten wäßrigen Beschichtungen kommen beliebige Substrate in Betracht, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können.

Im allgemeinen besitzen die mit den erfindungsgemäßen Polyisocyanatgemischen formulierten wäßrigen Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften.

Selbstverständlich lassen sie sich jedoch auch unter forcierten Bedingungen bei erhöhter Temperatur bzw. durch Einbrennen bei Temperaturen bis 260°C trocknen.

Aufgrund ihrer hervorragenden Wasseremulgierbarkeit, die eine homogene, besonders feinteilige Verteilung in wäßrigen Lackbindemitteln ermöglicht, führt die Verwendung der erfindungsgemäßen Polyisocyanatgemische als Vernetzerkomponente für wäßrige Polyurethanlacke zu Beschichtungen mit hervorragenden optischen Eigenschaften, insbesondere hohem Oberflächenglanz, Verlauf und hoher Transparenz.

Neben der bevorzugten Verwendung als Vernetzerkomponenten für wäßrige 2K-PUR-Lacke eignen sich die erfindungsgemäßen Polyisocyanatgemische hervorragend als Vernetzer für wäßrige Klebstoffdispersionen, Leder- und Textilbeschichtungen oder Textildruckpasten sowie auch als AX-freie Papierhilfsmittel.

Die folgenden Beispiele dienen zur weiteren Erläuterung der Erfindung. Alle Prozentangaben beziehen sich, soweit nichts Anderslautendes vermerkt, auf Gewichtsprozente.

### Beispiele

### Herstellung der Ausgangsverbindungen B)

### Polyetheresteralkohol B1)

1000 g eines auf Methanol gestarteten, monofunktionellen Polyethylenoxidpolyethers mit einem mittleren Molekulargewicht von 750 und 228 g ε-Caprolacton werden bei Raumtemperatur unter trockenem Stickstoff vermischt, mit 0,1 g Phosphorsäure versetzt und anschließend für 24 h auf 130°C erhitzt. Nach Abkühlen auf Raumtemperatur erhält man ein farbloses, wachsartiges Produkt mit folgenden Kenndaten:

| | |
|---|---|
| OH-Zahl | 60 mg KOH/g |
| freies ε-Caprolacton | 0,1% |
| mittleres Molekülargewicht (aus OH-Zahl ber.) | 933 |
| Gehalt an Ethylenoxideinheiten | 76,9 % |

### Polyetheresteralkohol B2)

1000 g eines auf 3-Ethyl-3-hydroxymethyloxetan gestarteten, monofunktionellen Polyethylenoxidpolyethers mit einem mittleren Molekulargewicht von 1210 werden mit 94 g ε-Caprolacton bei Raumtemperatur unter trockenem Stickstoff vermischt, mit 0,1 g Phosphorsäure versetzt und anschließend für 24 h auf 130°C erwärmt. Nach Abkühlen auf Raumtemperatur erhält man ein farbloses wachsartiges Produkt mit folgenden Kenndaten:

| | |
|---|---|
| OH-Zahl | 42 mg KOH/g |
| freies ε-Caprolacton | 0,3 % |
| mittleres Molekulargewicht (aus OH-Zahl ber.) | 1333 |
| Gehalt an Ethylenoxideinheiten | 82,1 % |

### Polyetheresteralkohol B3)

1000 g eines auf Methanol gestarteten, monofunktionellen Polyethylenoxidpolyethers mit einem mittleren Molekulargewicht von 350 und 326 g ε-Caprolacton werden bei Raumtemperatur unter trockenem Stickstoff vermischt, mit 0,1 g Phosphorsäure versetzt und anschließend für 24 h auf 130°C erhitzt. Nach Abkühlen auf Raumtemperatur erhält man eine farblose Flüssigkeit mit folgenden Kenndaten:

| | |
|---|---|
| OH-Zahl | 120 mg KOH/g |
| freies ε-Caprolacton | < 0,1 % |
| mittleres Molekulargewicht (aus OH-Zahl ber.) | 467 |
| Gehalt an Ethylenoxideinheiten | 68,1 % |

### Beispiel 1

83,9 Gew.-Teile eines Isocyanuratgruppen-haltigen Polyisocyanates auf Basis von 1,6-Diisocyanatohexan (HDI) mit einem NCO-Gehalt von 21,5 %, einer mittleren NCO-Funktionalität von ca. 3,8 und einer Viskosität von 3 000 mPas (23 °C) werden bei Raumtemperatur unter trockenem Stickstoff und unter Rühren mit 16,1 Gew.-Teilen des Polyetheralkohols B1), entsprechend einem NCO-/OH-Äquivalentverhältnis von 24,9:1, versetzt und anschließend für 3 h auf 100°C erwärmt. Nach Abkühlen auf Raumtemperatur liegt ein erfindungsgemäßes praktisch farbloses klares Polyisocyanatgemisch mit folgenden Kenndaten vor:

| | |
|---|---|
| NCO-Gehalt | 17,3 % |
| NCO-Funktionalität | 3,6 |
| Viskosität (23°C) | 3100 mPas |
| Ethylenoxidgehalt | 12,4 % |

75 g dieses Polyisocyanatgemisches werden in einem Erlenmeyerkolben mit 175 g entionisiertem Wasser versetzt und durch leichtes Rühren in eine feinteilige, blaustichige Emulsion überführt. Die Emulsion ist auch nach einer Standzeit von 24 h noch stabil und zeigt keinerlei Ausfällungen oder Bodensatz.

Zum Vergleich werden gemäß der Lehre der EP-A 206 059 87,0 Gew.-Teile des oben beschriebenen Isocyanuratgruppen-haltigen Polyisocyanates auf Basis von HDI mit 13,0 Gew.-Teilen des zur Herstellung des Polyetheresteralkohols B1) eingesetzten Polyethylenoxidpolyethers, entsprechend einem NCO-/OH-Äquivalentverhältnis von 25,7:1, versetzt und anschließend auf 100°C erwärmt, bis nach 4 h ein NCO-Gehalt von 18,0 % erreicht ist. Beim Abkühlen kristallisiert das Produkt, das ebenfalls einen Ethylenoxidgehalt von 12,4 % aufweist, teilweise aus und ist somit für Lackanwendungen unbrauchbar.

### Beispiel 2

87,8 Gew.-Teile des in Beispiel 1 beschriebenen Isocyanuratgruppen-haltigen Polyisocyanats auf Basis von HDI werden bei Raumtemperatur unter trockenem Stickstoff und unter Rühren mit 12,2 Gew.-Teilen des Polyetheresteralkohols B2), entsprechend einem NCO/OH-Äquivalentverhältnis von 49,1:1, versetzt und anschließend für 3 h auf 100°C erwärmt. Nach Abkühlen auf Raumtemperatur liegt ein erfindungsgemäßes, praktisch farbloses klares Polyisocyanatgemisch mit folgenden Kenndaten vor:

| | |
|---|---|
| NCO-Gehalt | 18,5 % |
| NCO-Funktionalität | 3,7 |
| Viskosität (23°C) | 3200 mPas |
| Ethylenoxidgehalt | 10 % |

Zum Vergleich werden gemäß der Lehre der EP-A 206 059 88,9 Gew.-Teile des oben beschriebenen Isocyanuratgruppen-haltigen Polyisocyanates auf Basis von HDI mit 11,1 Gew.-Teilen des zur Herstellung des Polyetheresteralkohols B2) eingesetzten Polyethylenoxidpolyethers, entsprechend einem NCO/OH-Äquivalentverhältnis von 49,6:1, versetzt und anschließend auf 100 °C erwärmt, bis nach 4 h ein NCO-Gehalt von 18,7 % erreicht ist. Nach Abkühlen und 12stündigem Stehen bei Raumtemperatur trübt das Produkt, das ebenfalls einen Ethylenoxidgehalt von 10,0 % aufweist, ein und es bilden sich grobe Gelteilchen.

### Beispiele 3 bis 6

Nach dem in Beispiel 1 beschriebenen Verfahren werden ausgehend vom in Beispiel 1 beschriebenen Isocyanuratgruppen-haltigen Polyisocyanat auf Basis von HDI und dem Polyetheresteralkohol B 3) bzw. dem zur Herstellung des Polyetheresteralkohols B3) eingesetzten Polyethylenoxidpolyetheralkoholes klare, farblose Polyisocyanatgemische folgender Zusammensetzungen und Kenndaten herstellt:

| Beispiel | 3 | 4 (Vergleich)* | 5 | 6 (Vergleich)* |
|---|---|---|---|---|
| Polyisocyanat [Gew.-Tle.] | 90 | 90 | 89 | 89 |
| Polyetherester B3) [Gew.-Tle.] | 10 | - | 11 | - |
| Polyetheralkohol [Gew.-Tle.] | - | 10 | - | 11 |
| NCO-/OH-Äquivalentverhältnis | 21,5:1 | 16,1:1 | 19,3:1 | 14,5:1 |
| NCO-Gehalt [%] | 18,5 | 18,2 | 18,2 | 17,8 |
| NCO-Funktionalität | 3,6 | 3,6 | 3,6 | 3,5 |
| Viskosität (23°C) [mPas] | 3050 | 3150 | 3000 | 3150 |
| Ethylenoxidgehalt [%] | 6,8 | 9,1 | 7,5 | 10,0 |

| | | | | |
|---|---|---|---|---|
| *gemäß EP-A 540 985 | | | | |

Jeweils 30 Gew.-Teile der Polyisocyanatgemische 3 bis 6 werden mit 70 Gew.-Teilen entionisiertem Wasser versetzt und durch 5minütiges Rühren (Magnetrührer) in feinteilige Emulsionen überführt. Nach 12 Stunden Standzeit hat sich in den Emulsionen der Polyisocyanatgemische 3 und 4 ein dicker weißer Bodensatz gebildet, die Emulsionen der Polyisocyanatgemische 5 und 6 sind hingegen noch stabil.

Sowohl erfindungsgemäß als auch im Vergleich wird eine bestimmte Mindestmenge an Hydrophilierungsmittel benötigt, um die Stabilität der Emulsion zu gewährleisten (hier jeweils 11 Gew.-Teile Polyetherester bzw. Polyetheralkohol (Bsp. 5 und 6)).

Der Vergleich zeigt, daß sich aus den erfindungsgemäßen Polyisocyanatgemischen (Beispiel 5), die Umsetzungsprodukte aus einem Polyetheralkohol und ε-Caprolacton enthalten, bereits bei niedrigeren Gesamtgehalten an Ethylenoxideinheiten sedimentationsstabile Emulsionen herstellen lassen, als aus wasserdispergierbaren Polyisocyanaten des Standes der Technik (Vergleichsbeispiel 6), die als Hydrophilierungsmittel nur den einfachen Polyetheralkohol enthalten.

Ein Vergleich des erfindungsgemäßen Polyisocyanatgemisches aus Beispiel 2 mit dem Polyisocyanatgemisch aus Vergleichsbeispiel 6 zeigt darüberhinaus, daß sich nach dem erfindungsgemäßen Verfahren kristallisationsstabile Produkte herstellen lassen, die gegenüber den kristallisationsstabilen, kurzkettigen Polyetheralkohole enthaltenden Polyisocyanaten der in der EP-A 540 985 beschriebenen Art bei gleich hohem Hydrophilierungsgrad (Ethylenoxidgesamtgehalt) einen höheren NCO-Gehalt sowie eine höhere Funktionalität aufweisen.

### Beispiel 7

87,5 Gew.-Teile eines 60 %ig in Butylacetat gelöst vorliegenden Isocyanuratgruppen-haltigen Polyisocyanates mit aromatisch und aliphatisch gebundenen Isocyanatgruppen auf der Basis von TDI und HDI im molaren Verhältnis von 2:1, einem NCO-Gehalt von 9,9 %, einer mittleren NCO-Funktionalität von 4,5 und einer Viskosität von 2400 mPas (23°C) werden bei Raumtemperatur unter Rühren und unter trockenem Stickstoff mit 12,5 Gew.-Teilen des Polyetheresteralkohols B3), entsprechend einem NCO/OH-Äquivalentverhältnis von 7,7:1, versetzt und anschließend für 5 h auf 50°C erwärmt. Nach Abkühlen auf Raumtemperatur liegt ein erfindungsgemäßes, farbloses Polyisocyanatgemisch mit folgenden Kenndaten vor:

| | |
|---|---|
| NCO-Gehalt | 7,5 % |
| NCO-Funktionalität | 3,9 |
| Festkörpergehalt | 65 % |
| Viskosität (23°C) | 2450 mPas |
| Ethylenoxidgehalt | 8,5 % |

### Beispiel 8 (Verwendung)

100 Gew.-Teile einer wäßrigen, hydroxyfunktionellen Polyacrylatdispersion mit einem Festkörpergehalt von 30 % und einem OH-Gehalt von 4,0 %, bezogen auf Festharz, im wesentlichen bestehend aus 8,3 % Acrylsäure, 18,1 % Methylmethacrylat, 41,7 % n-Butylacrylat und 31,9 % Hydroxy-C₃-alkylacrylat (Anlagerungsprodukt von Propylenoxid an Acrylsäure) werden mit 0,6 Gew.-Teilen einer 25 %igen wäßrigen Lösung eines handelsüblichen Emulgators (Emulgator WN, Bayer AG, Leverkusen), 2,25 Gew.-Teilen einer 20 %igen wäßrigen Lösung eines handelsüblichen, nichtionischen Polyurethan-Verdickers (^{®}Acrysol RM8, Rohm und Haas, Frankfurt) und 0,7 Gew.-Teilen eines handelsüblichen Entschäumers (^{®}Bevaloid 58iB, Erbslöh, Düsseldorf) gemischt. Die Zubereitung ist unbegrenzt lagerstabil.

Dem obengenannten Ansatz setzt man 25,8 Gew.-Teile des erfindungsgemäßen Polyisocyanatgemisches aus Beispiel 1 zu (entsprechend einem Äquivalentverhältnis von Isocyanatgruppen zu alkoholischen Hydroxylgruppen von 1,5:1) und homogenisiert durch intensives Rühren.

Die Verarbeitungszeit des applikationsfertigen, also gemischten Ansatzes beträgt 3 bis 4 Stunden. Der in einer Naßfilm-Schichtdicke von 200 µm (= ca. 50 µm trocken) aufgetragene Film erscheint direkt nach dem Auftrag als Naßfilm fast transparent mit einem leicht gelblichen Schimmer (Tyndall-Effekt). Die Zeit bis zur Staubtrocknung beträgt ca. 2 bis 3 Stunden und bis zur Drucktrocknung ca. 3 bis 4 Stunden. Es bildet sich ein glänzender, völlig klarer und transparenter Lackfilm mit folgenden Eigenschaften:

| | |
|---|---|
| Optik (Glanz/Transparenz) | sehr gut |
| Bleistifthärte | 2 H |

| Lösemittelbeständigkeit | |
|---|---|
| Testbenzin | sehr gut |
| Solventnaphtha 100 | sehr gut |
| Methoxypropylacetat | sehr gut |
| Aceton | gut |
| Ethanol | gut |

## Patentansprüche

1. Wasserdispergierbare Polyisocyanatgemische, gekennzeichnet durch
a) eine mittlere NCO-Funktionalität von 1,8 bis 4,6,
b) einen Gehalt an Isocyanatgruppen (berechnet als NCO; Molekulargewicht = 42) von 7,0 bis 21,5 Gew.-%
und
c) einen Gehalt an innerhalb von Polyetheresterketten der allgemeinen Formel
Y[-Z-O]ₘ[-CO-(CH₂)₅-O]ₙ- ,
angeordneten Ethylenoxideinheiten (berechnet als C₂H₄O, Molekulargewicht = 44) von 5 bis 25 Gew.-%, wobei
Y für einen Rest R¹-O- oder einen Rest R²R³N- steht,
worin
R¹, R² und R³ für gleiche oder verschiedene Reste stehen und jeweils einen gesättigten oder ungesättigten aliphatischen oder cycloaliphatischen, einen gegebenenfalls alkylsubstituierten aromatischen oder araliphatischen Rest bedeuten, der bis zu 18 Kohlenstoffatome und gegebenenfalls bis zu 3 Heteroatome aus der Reihe Sauerstoff, Schwefel, Stickstoff enthalten kann, und wobei
R² und R³ auch zusammen mit dem Stickstoffatom und gegebenenfalls einem Sauerstoff- oder einem weiteren Stickstoffatom einen heterocyclischen Ring mit 3 bis 5 Kohlenstoffatomen bilden können,
Z für einen Ethylenrest (-CH₂-CH₂-) oder einen Propylenrest (-CH₂-CH(CH₃)-) steht, wobei der Anteil der Ethylenreste an der Gesamtmenge der Alkylenreste Z mindestens 70 Mol-% beträgt,
m für eine ganze oder im statistischen Mittel gebrochene Zahl von 5 bis 70 und
n für eine ganze oder im statistischen Mittel gebrochene Zahl von 0,5 bis 5 steht,
mit der Maßgabe, daß der Quotient m:n mindestens 3,5 beträgt.

2. Wasserdispergierbare Polyisocyanatgemische, gekennzeichnet durch
a) eine mittlere NCO-Funktionalität von 2,0 bis 4,0,
b) einen Gehalt an Isocyanatgruppen (berechnet als NCO; Molekulargewicht = 42) von 12,0 bis 20,5 Gew.-%
und
c) einen Gehalt an innerhalb von Polyetheresterketten der allgemeinen Formel
Y[-Z-O]ₘ[-CO-(CH₂)₅-O]ₙ-
angeordneten Ethylenoxideinheiten (berechnet als C₂H₄O, Molekulargewicht = 44) von 7 bis 20 Gew.-%, wobei
Y für einen Rest R¹-O- steht,
wobei
R¹ für einen, gegebenenfalls ein Stickstoffatom und/oder ein Sauerstoffatom als Heteroatome enthaltenden (cyclo)aliphatischen Kohlenwasserstoffrest mit 1 bis 10 Kohlenstoffatomen steht,
Z für einen Ethylenrest (-CH₂-CH₂-) oder einen Propylenrest (-CH₂-CH(CH₃)-) steht, wobei der Anteil der Ethylenreste an der Gesamtmenge der Alkylenreste Z mindestens 80 mol-% beträgt,
m für eine ganze oder im statistischen Mittel gebrochene Zahl von 5 bis 60 und
n für eine ganze oder im statistischen Mittel gebrochene Zahl von 0,5 bis 3 steht,
mit der Maßgabe, daß der Quotient m:n mindestens 4,5 beträgt.

3. Wasserdipergierbare Polyisocyanatgemische gemäß Anspruch 1 und 2 mit ausschließlich aliphatisch und/oder cycloaliphatisch gebundenen Isocyanatgruppen.

4. Verfahren zur Herstellung wasserdispergierbarer Polyisocyanatgemische gemäß Anspruch 1, dadurch gekennzeichnet, daß man
A) eine Polyisocyanatkomponente mit einer mittleren NCO-Funktionalität von 2,1 bis 5,0 und einem Gehalt an Isocyanatgruppen (berechnet als NCO; Molekulargewicht = 42) von 8,0 bis 22,5 Gew.-% mit
B) einem Polyetherestermonoalkohol der allgemeinen Formel
Y[-Z-O]ₘ[-CO-(CH₂)₅-O]ₙ-H,
in welcher Y, Z, m und n die in Anspruch 1 angegebene Bedeutung aufweisen,
unter Einhaltung eines NCO/OH-Äquivalentverhältnisses von 4:1 bis 120:1 umsetzt, wobei im übrigen Art und Mengenverhältnisse der genannten Ausgangskomponenten so gewählt werden, daß die resultierenden Umsetzungsprodukte den in Anspruch 1 unter a) bis c) genannten Bedingungen entsprechen.

5. Verfahren zur Herstellung wasserdispergierbarer Polyisocyanatgemische gemäß Anspruch 2, dadurch gekennzeichnet, daß man
A) eine Polyisocyanatkomponente mit einer mittleren NCO-Funktionalität von 2,3 bis 4,2 und einem Gehalt an Isocyanatgruppen (berechnet als NCO; Molekulargewicht = 42) von 14,0 bis 22,5 Gew.-% mit
B) einem Polyetherestermonoalkohol der allgemeinen Formel
Y[-Z-O]ₘ[-CO-(CH₂)₅-O]ₙ-H,
in welcher Y, Z, m und n die in Anspruch 2 angegebene Bedeutung aufweisen,
unter Einhaltung eines NCO/OH-Äquivalentverhältnisses von 6:1 bis 100:1 umsetzen, wobei im übrigen Art und Mengenverhältnisse der genannten Ausgangskomponenten so gewählt werden, daß die resultierenden Umsetzungsprodukte den in Anspruch 2 unter a) bis c) genannten Bedingungen entsprechen.

6. Verfahren gemäß Anspruch 4 und 5, dadurch gekennzeichnet, daß man als Komponente A) ein Polyisocyanat mit ausschließlich aliphatisch und/oder cycloaliphatisch gebundenen Isocyanatgruppen einsetzt.

7. Verwendung der Polyisocyanatgemische gemäß Anspruch 1 bis 3 als Ausgangskomponente bei der Herstellung von Polyurethankunststoffen.

8. Verwendung der Polyisocyanatgemische gemäß Anspruch 1 bis 3 als Vernetzerkomponente für wasserlösliche oder -dispergierbare Lackbindemittel oder Lackbindemittelkomponenten bei der Herstellung von Überzügen unter Verwendung von wäßrigen Beschichtungsmitteln auf Basis derartiger Bindemittel oder Bindemittelkomponenten.

## Claims

1. Water-dispersible polyisocyanate mixtures
characterised by
a) an average NCO functionality of from 1.8 to 4.6,
b) an isocyanate group content (calculated as NCO; molecular weight = 42) of from 7.0 to 21.5 wt.%
and
c) a 5 to 25 wt.% content of ethylene oxide units (calculated as C₂H₄O, molecular weight = 44) arranged within polyether ester chains of the general formula
Y[-Z-O]ₘ[-CO-(CH₂)₅-O]ₙ-,
wherein
Y stands for a radical R¹-O- or a radical R²R³N-,
in which
R¹, R² and R³ stand for radicals which are the same or different and in each case denote a saturated or unsaturated aliphatic or cycloaliphatic, an optionally alkyl-substituted aromatic or araliphatic radical which may contain up to 18 carbon atoms and optionally up to 3 heteroatoms from the series oxygen, sulfur, nitrogen, and wherein
R² and R³ may also form together with the nitrogen atom and optionally an oxygen or a further nitrogen atom a heterocyclic ring having 3 to 5 carbon atoms,in whichin which
Z stands for an ethylene radical (-CH₂-CH₂-) or a propylene radical (-CH₂-CH(CH₃)-), wherein the proportion of ethylene radicals in the total quantity of alkylene radicals Z is at least 70 mol.%,
m stands for an integer or a random average numerical fraction of from 5 to 70 and
n stands for an integer or a random average numerical fraction of from 0.5 to 5,
provided that the quotient m:n is at least 3.5.

2. Water-dispersible polyisocyanate mixtures
characterised by
a) an average NCO functionality of from 2.0 to 4.0,
b) an isocyanate group content (calculated as NCO; molecular weight = 42) of from 12.0 to 20.5 wt.%,
and
c) a 7 to 20 wt.% content of ethylene oxide units (calculated as C₂H₄O, molecular weight = 44) arranged within polyether ester chains of the general formula
Y[-Z-O]ₘ[-CO- (CH₂)₅-O]ₙ-,
wherein
Y stands for a radical R¹-O-,
wherein
R¹ stands for a (cyclo)aliphatic hydrocarbon radical having 1 to 10 carbon atoms which contains optionally as heteroatoms a nitrogen atom and/or an oxygen atom,
Z stands for an ethylene radical (-CH₂-CH₂-) or a propylene radical (-CH₂-CH(CH₃)-), wherein the proportion of ethylene radicals in the total quantity of alkylene radicals Z is at least 80 mol.%,
m stands for an integer or a random average numerical fraction of from 5 to 60 and
n stands for an integer or a random average numerical fraction of from 0.5 to 3,
provided that the quotient m:n is at least 4.5.

3. Water-dispersible polyisocyanate mixtures according to Claims 1 and 2 having exclusively aliphatically and/or cycloaliphatically bound isocyanate groups.

4. Process for the preparation of water-dispersible polyisocyanate mixtures according to Claim 1, characterised in that
A) a polyisocyanate component having an average NCO functionality of from 2.1 to 5.0 and an isocyanate group content (calculated as NCO; molecular weight = 42) of from 8.0 to 22.5 wt.% is reacted with
B) a polyether ester monoalcohol of the general formula
Y[-Z-O]ₘ[-CO- (CH₂)₅-O]ₙ-H,
in which Y, Z, m and n denote the same as indicated in Claim 1,
observing an NCO/OH equivalent ratio of from 4 : 1 to 120 : 1, wherein as for the rest the type and quantitative ratios of the starting components named are selected such that the resulting reaction products conform to the conditions named in Claim 1 under a) to c).

5. Process for the preparation of water-dispersible polyisocyanate mixtures according to Claim 2, characterised in that
A) a polyisocyanate component having an average NCO functionality of from 2.3 to 4.2 and an isocyanate group content (calculated as NCO; molecular weight = 42) of from 14.0 to 22.5 wt.% is reacted with
B) a polyether ester monoalcohol of the general formula
Y [-Z-O]ₘ[-CO- (CH₂)₅-O]ₙ-H,
in which Y, Z, m and n denote the same as indicated in Claim 2,
observing an NCO/OH equivalent ratio of from 6 : 1 to 100 : 1, wherein as for the rest the type and quantitative ratios of the starting components named are selected such that the resulting reaction products conform to the conditions named in Claim 2 under a) to c).

6. Process according to Claims 4 and 5, characterised in that a polyisocyanate having exclusively aliphatically and/or cycloaliphatically bound isocyanate groups is utilised as component A).

7. Use of the polyisocyanate mixtures according to Claims 1 to 3 as a starting component in the preparation of polyurethane plastics.

8. Use of the polyisocyanate mixtures according to Claims 1 to 3 as a cross-linking component for water-soluble or water-dispersible lacquer binders or lacquer binder components in the preparation of coatings with the use of aqueous coating compositions based on such binders or binder components.

## Revendications

1. Mélanges de polyisocyanates aptes à être dispersés dans l'eau, caractérisés par
a) une fonctionnalité NCO moyenne de 1,8 à 4,6,
b) une teneur en groupes isocyanate (calculés comme groupes NCO; poids moléculaire = 42) de 7,0 à 21,5 % en poids,
et
c) une teneur en unités d'oxyde d'éthylène (calculées comme C₂H₄O, poids moléculaire = 44) agencées à l'intérieur de chaînes de polyétheresters répondant à la formule générale
Y[-Z-O]ₘ[-CO-(CH₂)₅-O]ₙ-,
de 5 à 25 % en poids, dans laquelle
Y représente un radical R¹-O- ou un radical R²R³N-,
dans lesquels
R¹, R² et R³ représentent des radicaux identiques ou différents et désignent respectivement un radical aliphatique ou cycloaliphatique saturé ou non saturé, un radical aromatique ou araliphatique portant le cas échéant un ou plusieurs substituants alkyle, qui peut contenir jusqu'à 18 atomes de carbone et, le cas échéant, jusqu'à 3 hétéroatomes choisis parmi la série comprenant un atome d'oxygène, un atome de soufre, un atome d'azote, et dans lesquels
R² et R³ peuvent également former, ensemble avec l'atome d'azote et, le cas échéant, avec un atome d'oxygène ou avec un autre atome d'azote, un noyau hétérocyclique contenant de 3 à 5 atomes de carbone,
Z représente un radical d'éthylène (-CH₂-CH₂-) ou un radical de propylène (-CH₂-CH(CH₃)-), la fraction qui représentent les radicaux d'éthylène par rapport à la quantité totale des radicaux alkylènes Z s'élevant à au moins 70 moles %,
m représente un nombre entier ou fractionnaire dans la moyenne statistique de 5 à 70, et
n représente un nombre entier ou fractionnaire dans la moyenne statistique de 0,5 à 5,
avec cette mesure que le quotient m:n s'élève à au moins 3,5.

2. Mélanges de polyisocyanates aptes à être dispersés dans l'eau, caractérisés par
a) une fonctionnalité NCO moyenne de 2,0 à 4,0,
b) une teneur en groupes isocyanate (calculés comme groupes NCO; poids moléculaire = 42) de 12,0 à 20,5 % en poids,
et
c) une teneur en unités d'oxyde d'éthylène (calculées comme C₂H₄O, poids moléculaire = 44) agencées à l'intérieur de chaînes de polyétheresters répondant à la formule générale
Y[-Z-O]ₘ[-CO-(CH₂)₅-O]ₙ-,
de 7 à 20 % en poids, dans laquelle
Y représente un radical R¹-O-,
dans lequel
R¹ représente un radical d'hydrocarbure (cyclo)aliphatique contenant le cas échéant, un atome d'azote et/ou un atome d'oxygène à titre d'hétéroatomes, contenant de 1 à 10 atomes de carbone,
Z représente un radical d'éthylène (-CH₂-CH₂-) ou un radical de propylène (-CH₂-CH(CH₃)-), la fraction que représente les radicaux d'éthylène par rapport à la quantité totale des radicaux alkylènes Z s'élevant à au moins 80 moles %,
m représente un nombre entier ou fractionnaire dans la moyenne statistique de 5 à 60, et
n représente un nombre entier ou fractionnaire dans la moyenne statistique de 0,5 à 3,
avec cette mesure que le quotient m:n s'élève à au moins 4,5.

3. Mélanges de polyisocyanates aptes à être dispersés dans l'eau selon les revendications 1 et 2, contenant des groupes isocyanates liés à titre exclusif à des radicaux alpiphatiques et/ou cycloaliphatiques.

4. Procédé pour la préparation de mélanges de polyisocyanates aptes à être dispersés dans l'eau selon la revendication 1, caractérisé en ce qu'on fait réagir
A) un composant de polyisocyanate possédant une fonctionnalité NCO moyenne de 2,1 à 5,0 et une teneur en groupes isocyanates (calculés comme groupes NCO; poids moléculaire = 42) de 8,0 à 22,5 % en poids avec
B) un polyétherester-monoalcool répondant à la formule générale
Y[-Z-O]ₘ[-CO-(CH₂)₅-O]ₙ-H,
dans laquelle Y, Z, m et n présentent la signification indiquée à la revendication 1,
tout en maintenant un rapport d'équivalents des groupes NCO/OH de 4:1 à 120:1, en sélectionnant par ailleurs le type et les proportions des composants de départ mentionnés de telle sorte que les produits réactionnels qui en résultent répondent aux conditions mentionnées à la revendication 1 sous a) à c).

5. Procédé pour la préparation de mélanges de polyisocyanates aptes à être dispersés dans l'eau selon la revendication 2, caractérisé en ce qu'on fait réagir
A) un composant de polyisocyanate possédant une fonctionnalité NCO moyenne de 2,3 à 4,2 et une teneur en groupes isocyanates (calculés comme groupes NCO; poids moléculaire = 42) de 14,0 à 22,5 % en poids avec
B) un polyétherester-monoalcool répondant à la formule générale
Y[-Z-O]ₘ[-CO-(CH₂)₅-O]ₙ-H,
dans laquelle Y, Z, m et n présentent la signification indiquée à la revendication 2,
tout en maintenant un rapport d'équivalents des groupes NCO/OH de 6:1 à 100:1, en sélectionnant par ailleurs le type et les proportions des composants de départ mentionnés de telle sorte que les produits réactionnels qui en résultent répondent aux conditions mentionnées à la revendication 2 sous a) à c).

6. Procédé selon les revendications 4 et 5, caractérisé en ce qu'on met en oeuvre, à titre de composant A), un polyisocyanate contenant des groupes isocyanates liés à titre exclusif à des radicaux alpiphatiques et/ou cycloaliphatiques.

7. Utilisation des mélanges de polyisocyanates selon les revendications 1 à 3 à titre de composants de départ lors de la préparation de substances synthétiques de polyuréthanne.

8. Utilisation des mélanges de polyisocyanates selon les revendications 1 à 3 à titre de composants de réticulation pour des liants de laques, de vernis ou de peintures ou bien pour des composants de liants de laques, de vernis ou de peintures solubles dans l'eau ou aptes à être dispersés dans l'eau lors de la préparation de recouvrements en utilisant des agents d'enduction aqueux à base de liants ou de composants de liants de ce type.
